**Europäisches Patentamt**

**European Patent Office**

**Office européen des brevets**

(19)

(11) Veröffentlichungsnummer: **0 241 831 B1**

# EUROPÄISCHE PATENTSCHRIFT

(12)

(45) Veröffentlichungstag der Patentschrift:
30.01.91 Patentblatt 91/05

(51) Int. Cl.⁵: **B60J 7/04**

(21) Anmeldenummer: **87105026.6**

(22) Anmeldetag: **04.04.87**

(54) **Fahrzeugdach.**

(30) Priorität: **15.04.86 JP 87298/86**

(43) Veröffentlichungstag der Anmeldung:
**21.10.87 Patentblatt 87/43**

(45) Bekanntmachung des Hinweises auf die
Patenterteilung:
**30.01.91 Patentblatt 91/05**

(84) Benannte Vertragsstaaten:
**DE ES FR GB IT SE**

(56) Entgegenhaltungen:
DE-A- 2 710 193
DE-A- 3 202 646
DE-A- 3 311 498
DE-C- 1 946 161
US-A- 2 122 712

(73) Patentinhaber: **Webasto AG Fahrzeugtechnik**
**Kraillinger Strasse 5 Stockdorf**
**D-8035 Gauting 2 (DE)**

(72) Erfinder: **Sakamoto, Hiroshi**
**2328-2o Ooazaiida Hachihonmatsu-cho**
**Higashi-Hiroshima shi Hiroshima-ken (JP)**
Erfinder: **Takeda, Akefumi**
**8o9, Ootada Kurose-cho**
**Kamo-gun Hiroshima-Ken (JP)**
Erfinder: **Sumitani, Manabu**
**1-3-17 Agachuo**
**Kure-shi Hiroshima-Ken (JP)**

## Beschreibung

Die Erfindung betrifft ein Fahrzeugdach mit einer festen Dachfläche, die eine durchgehende Dachöffnung aufweist, die mittels zweier Deckel wahlweise verschlossen oder mindestens teilweise freigelegt werden kann, wobei die Deckel in ihrer Schließstellung in Fahrzeuglängsrichtung unmittelbar hintereinanderliegen und wobei der vordere Deckel ausgehend von seiner Schließstellung sowohl mit seiner Hinterkante über die feste Dachfläche ausstellbar als auch nach hinten verschiebbar ist.

Bei einem bekannten Fahrzeugdach dieser Art (DE-C-19 46 161) kann der hintere Deckel aus seiner Schließstellung abgesenkt und in einen an die Dachöffnung nach hinten anschließenden, unter der festen Dachfläche liegenden Aufnahmeraum geschoben werden. Anschließend daran läßt sich der vordere Deckel in die zuvor von dem hinteren Deckel in der Dachöffnung eingenommene Stellung zurückschieben. Bei diesem Fahrzeugdach muß die Hinterkante der Dachöffnung in ausreichendem Abstand von der Hinterkante der festen Dachfläche liegen, um unter der festen Dachfläche den Aufnahmeraum für den zurückgeschobenen hinteren Deckel bereitstellen zu können. Die Längsabmessung der Dachöffnung ist dadurch beschränkt, und diese Dachöffnung kann in Fahrzeuglängsrichtung nur über etwa ihre halbe Länge freigelegt werden.

Der Erfindung liegt die Aufgabe zugrunde, ein Fahrzeugdach der vorstehend genannten Art derart weiterzubilden, daß die Dachfläche bei Bedarf in wesentlich größerem Umfang freigelegt werden kann.

Ausgehend von einem Fahrzeugdach der vorstehend genannten Art wird diese Aufgabe erfindungsgemäß dadurch gelöst, daß

– die Dachöffnung mindestens näherungsweise über die volle Länge der festen Dachfläche reicht,

– der hintere Deckel abnehmbar ausgebildet ist, und

– der vordere Deckel nach Abnahme des hinteren Deckels in ausgestelltem Zustand in eine Stellung verschiebbar ist, in der er mindestens mit seinem hinteren Teil über den hinteren Rand der Dachöffnung nach hinten hinausragt.

Es sind zwar sogenannte Hebedächer mit einem einzigen Deckel bekannt (DE-C-27 10 193), der aus seiner Schließstellung ausgestellt oder wahlweise abgenommen werden kann. Dabei ist jedoch die Größe der Dachöffnung insbesondere dadurch beschränkt, daß man den abgenommenen Deckel beispielsweise im Kofferraum verstauen können muß. Daneben sind sogenannte Spoilerdächer bekannt (DE-A-33 11 498), die mit einem gleichfalls einteiligen Deckel versehen sind, der ausgestellt und in ausgestelltem Zustand nach hinten in eine Stellung verschoben werden kann, in der er mindestens mit seinem hinteren Teil über den hinteren Rand der Dachöffnung nach hinten hinausragt. Auch in einem solchen Fall ist aber die Größe des freilegbaren Teils der Dachfläche in Fahrzeuglängsrichtung beschränkt, weil der ausgestellte Deckel insbesondere bei Fahrt mit hoher Geschwindigkeit erheblichen Kräften ausgesetzt ist und infolgedessen nicht beliebig vergrößert werden kann.

Bei dem Fahrzeugdach nach der Erfindung bleiben die Deckel, obwohl sich die Dachöffnung mindestens näherungsweise über die volle Länge der festen Dachfläche erstreckt, relativ kurz, so daß der abgenommene hintere Deckel problemlos gehandhabt und verstaut werden kann, während sich die auf den ausgestellten vorderen Deckel einwirkenden Kräfte beherrschen lassen. Die mindestens näherungsweise über die volle Länge der festen Dachfläche reichende Dachöffnung kann, falls erwünscht, über den größeren Teil ihrer Längsabmessung freigelegt werden.

Das erfindungsgemäße Fahrzeugdach erlaubt es, bei eingesetztem hinterem Deckel den vorderen Deckel auszustellen und nach Art eines Spoilerdaches über dem hinteren Deckel nach hinten zu schieben. Der hintere Deckel kann aber auch abgenommen werden. Danach läßt sich der vordere Deckel weiter nach hinten schieben.

Bevorzugte weitere Ausgestaltungen der Erfindung ergeben sich aus den Unteransprüchen.

Ein bevorzugtes Ausführungsbeispiel der Erfindung ist nachstehend anhand der beiliegenden Zeichnungen näher erläutert. Es zeigen :

Fig. 1 eine perspektivische Ansicht eines mit einem Fahrzeugdach nach der Erfindung ausgerüsteten Kraftfahrzeugs, bei dem sich beide Deckel in ihrer Schließstellung befinden,

Fig. 2 einen Längsschnitt entlang der Linie II-II der Fig. 1,

Fig. 3 einen Querschnitt entlang der Linie III-III der Fig. 1,

Fig. 4 eine perspektivische Ansicht entsprechend Fig. 1, wobei jedoch der vordere Deckel ausgestellt und zurückgeschoben ist,

Fig. 5 einen Längsschnitt entlang der Linie V-V der Fig. 4,

Fig. 6 eine perspektivische Ansicht entsprechend Fig. 1, wobei jedoch der vordere Deckel nur ausgestellt und der hintere Deckel abgenommen ist,

Fig. 7 eine perspektivische Ansicht entsprechend Fig. 1, wobei der hintere Deckel abgenommen und der vordere Deckel in seine hintere Endstellung zurückgeschoben ist, und

Fig. 8 einen Längsschnitt entlang der Linie VIII-VIII der Fig. 7.

Das veranschaulichte Fahrzeug weist eine feste Dachfläche 1 mit einer rechteckigen Dachöffnung 2 auf. Die Dachöffnung 2 reicht näherungsweise über die volle Länge der festen Dachfläche 1. Sie erstreckt sich damit bei dem dargestellten Personenkraftwagen sowohl über die Vordersitze 3 als auch über die Rücksitze 4. Zum Verschließen der Dachöffnung 2 sind ein vorderer Deckel 5 und ein hinterer Deckel 6 vorgesehen. Der vordere Deckel 5 ist nach Art eines sogenannten Spoilerdaches ausgebildet, wobei der Dekkel 5 mit seiner Hinterkante über die feste Dachfläche 1 ausgestellt und in ausgestelltem Zustand nach hinten geschoben werden kann. Der hintere Deckel 6 läßt sich dagegen von der festen Dachfläche 1 lösen und abnehmen.

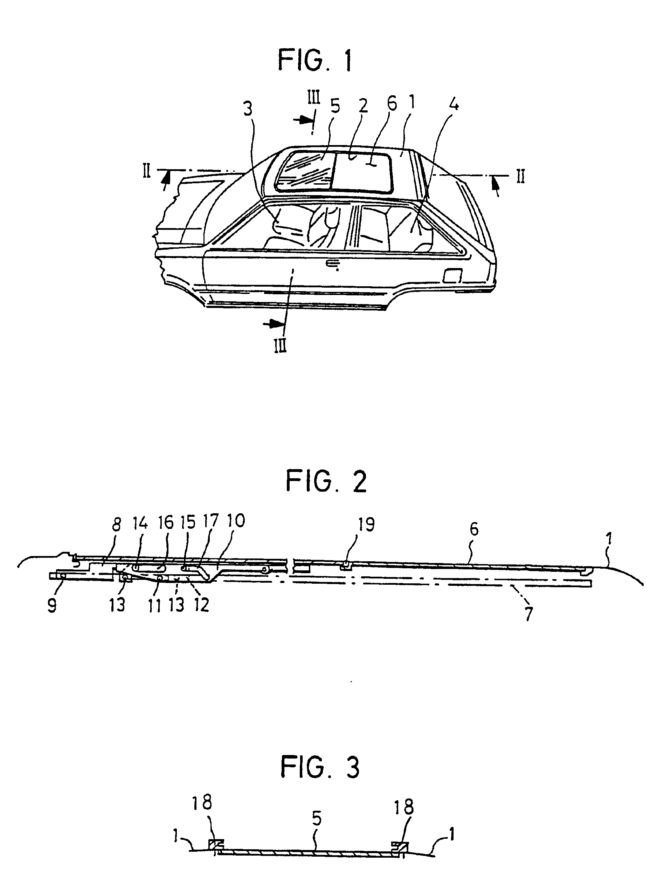

Wie aus Fig. 2 hervorgeht, sitzen zu beiden Seiten der Dachöffnung 2 unter der festen Dachfläche 1 Führungsschienen 7, die jeweils über die volle Länge der durchgehenden Dachöffnung 2 reichen. Der vordere Deckel 5 ist beidseits auf je einem Deckelträger 8 abgestützt. Der vordere Endabschnitt jedes Deckelträgers 8 ist über ein mit der betreffenden Führungsschiene 7 zusammenwirkendes Gleitstück 9 in Längsrichtung der Führungsschiene 7 verschiebbar und in lotrechter Ebene gegenüber der Führungsschiene 7 schwenkbar gelagert.

Im mittleren Bereich jedes der beiden Deckelträger 8 ist das hintere Ende eines Ausstellhebels 10 angelenkt, der über ein mit der jeweiligen Führungsschiene 7 zusammenwirkendes Gleitstück 11 in lotrechter Ebene schwenkbar und entlang der Führungsschiene 7 verschiebbar gelagert ist. Des weiteren ist ein Verstellglied 12 vorgesehen, das über zwei Gleitstücke 13 entlang der Führungsschiene 7 verschiebbar gelagert und mittels einer nichtveranschaulichten Antriebsvorrichtung in Längsrichtung der Führungsschiene verstellbar ist. Von der einen Seitenfläche des Verstellgliedes 12 stehen ein vorderer und ein hinterer Kulissenstift 14 bzw. 15 vor. Die Kulissenstifte 14, 15 greifen in einen vorderen Kulissenschlitz 16 bzw. einen hinteren Kulissenschlitz 17 im mittleren Bereich des Ausstellhebels 10 ein.

Eine Deckelbetätigungseinrichtung der vorstehend erläuterten Art ist im einzelnen aus der DE-A-33 11 498 bekannt und bedarf infolgedessen vorliegend keiner näheren Erläuterung.

Der hintere Deckel 6 kann mit der Dachöffnung 2 lösbar in Eingriff gebracht werden, um deren hinteren Teil zu verschließen. Der Deckel 6 wird in der Schließstellung durch nichtveranschaulichte Feststellglieder gehalten. Der Deckel 6 kann nach Abnahme von der Dachöffnung 2 im Kofferraum untergebracht oder in Schienen 18 eingeschoben werden, die bei der in Fig. 3 veranschaulichten Ausführungsform an den beiden Seitenrändern des vorderen Deckels 5 auf dessen Oberseite angebracht sind.

Wie aus den Fig. 1 und 2 hervorgeht, läßt sich die Dachöffnung 2 mittels der Deckel 5, 6 vollkommen verschließen. Im voll geschlossenen Zustand legen sich die Kulissenstifte 14, 15 des Verstellgliedes 12 gegen die vorderen Enden der Kulissenschlitze 16, 17 an, und die einander zugewendeten Ränder der beiden Deckel 5, 6 stehen über eine Dichtung 19 in engem Kontakt miteinander.

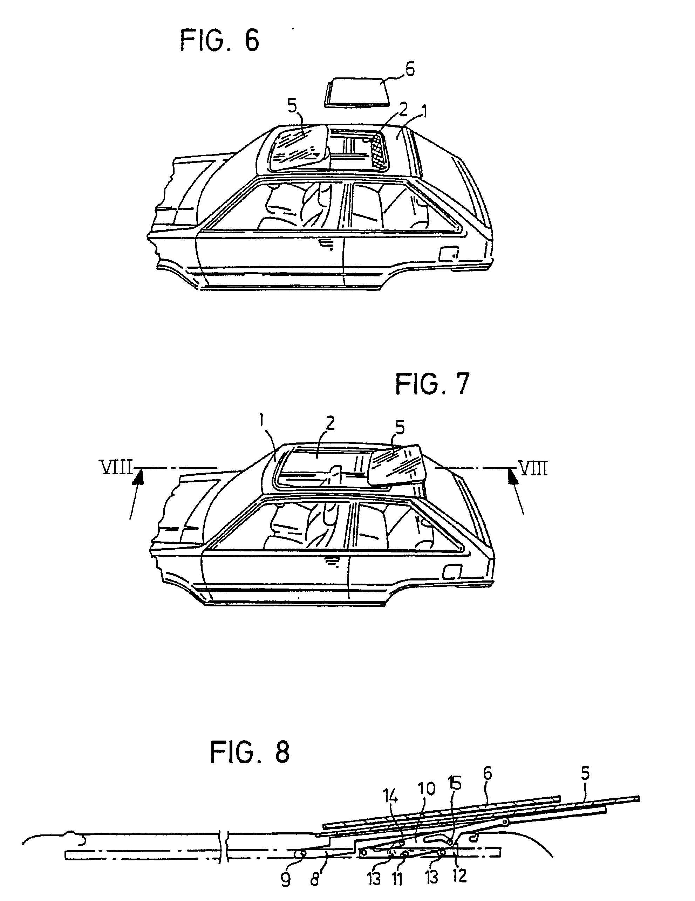

Um den hinteren Teil des vorderen Deckels 5 ausgehend von der geschlossenen Stellung nach oben zu verschwenken, wird das Verstellglied 12 nach hinten bewegt. Die Relativbewegung zwischen den Kulissenschlitzen 16, 17 und den Kulissenstiften 14, 15 bewirkt ein Verschwenken der Ausstellhebel 10 um das jeweilige Gleitstück 11 und entsprechend eine Schwenkbewegung der Dekkelträger 8 um das zugehörige Gleitstück 9. Der Deckel 5 wird dadurch über die feste Dachfläche 1 ausgestellt (Fig. 6). Über den dadurch gebildeten Spalt zwischen dem hinteren Ende des vorderen Deckels 5 und dem vorderen Ende des hinteren Dekkels 6 wird das Fahrzeuginnere belüftet.

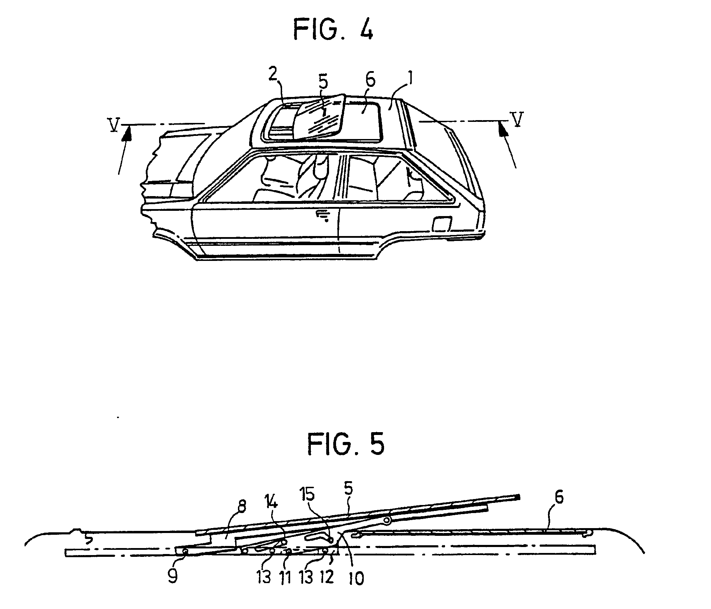

Wenn das Verstellglied 12 weiter nach hinten bewegt wird, legen sich die Kulissenstifte 14, 15 gegen die hinteren Enden der Kulissenschlitze 16, 17 an. Der Deckel 5 wird von dem Verstellglied 12 in die in den Fign. 4 und 5 gezeigte Stellung mitgenommen, wodurch der vordere Teil der Dachöffnung 2 freigelegt wird.

Soll die Dachöffnung 2 in größerem Umfang freigelegt werden, wird nach Ausstellen des vorderen Deckels 5 entsprechend Fig. 6 der hintere Deckel 6 aus der Dachöffnung 2 herausgenommen. Dann wird das Verstellglied 12 weiter nach hinten verschoben, wodurch der Deckel 5 in seine hintere Endstellung gebracht wird, in welcher er mindestens mit seinem hinteren Teil über den hinteren Rand der Dachöffnung 2 nach hinten hinausragt. Dabei kann der Deckel 6 in die Schienen 18 eingeschoben werden, so daß er auf und parallel zu dem vorderen Deckel 5 liegt, wie dies in Fig. 8 dargestellt ist.

Gegebenenfalls kann der hintere Deckel in Fahrzeuglängsrichtung in zwei oder mehr abnehmbare Deckelteile unterteilt werden, um den abgenommenen Deckel auch bei sehr beschränktem Stauraum unterbringen zu können. Des weiteren ist es grundsätzlich möglich, auch den vorderen Deckel 5 nach Art eines Lamellendaches (DE-A-32 02 646) zu unterteilen.

**Ansprüche**

1. Fahrzeugdach mit einer festen Dachfläche (1), die eine durchgehende Dachöffnung (2) aufweist, die mittels zweier Deckel (5, 6) wahlweise verschlossen oder mindestens teilweise freigelegt werden kann, wobei die Deckel in ihrer Schließstellung in Fahrzeuglängsrichtung unmittelbar hintereinander liegen und wobei der vordere Deckel (5) ausgehend von seiner Schließstellung sowohl mit seiner Hinterkante über die feste Dachfläche ausstellbar als auch nach hinten verschiebbar ist, **dadurch gekennzeichnet, daß**

– die Dachöffnung (2) mindestens näherungsweise über die volle Länge der festen Dachfläche (1) reicht,

– der hintere Deckel (6) abnehmbar ausgebildet ist und

– der vordere Deckel (5) nach Abnahme des hinteren Deckels (6) in ausgestelltem Zustand in eine Stellung verschiebbar ist, in der er mindestens mit seinem hinteren Teil über den hinteren Rand der Dachöffnung (2) nach hinten hinausragt.

2. Fahrzeugdach nach Anspruch 1, dadurch gekennzeichnet, daß der vordere Deckel (5) mit Halterungen (Schienen 18) versehen ist, die ein lösbares Festhalten des abgenommenen hinteren Deckels (6) in einer zu dem vorderen Deckel (5) parallelen Lage erlauben.

3. Fahrzeugdach nach Anspruch 2, dadurch gekennzeichnet, daß die Halterungen als an den beiden Seitenrändern des vorderen Deckels (5) auf dessen Oberseite angebrachte Schienen (18) ausgebildet sind.

4. Fahrzeugdach nach einem der vorhergehenden Ansprüche, dadurch gekennzeichnet, daß der vordere Deckel (5) beidseits auf einem Deckelträger (8) montiert ist, der im Bereich seines vorderen Endes über ein Gleitstück (9) schwenkbar und entlang einer seitlichen Führungsschiene (7) verschiebbar gelagert ist, die sich über die volle Länge der Dachöffnung (2) erstreckt.

5. Fahrzeugdach nach Anspruch 4, dadurch gekennzeichnet, daß an dem Deckelträger (8) das hintere Ende eines Ausstellhebels (10) angelenkt ist, der über ein Gleitstück (11) schwenkbar und entlang der Führungsschiene (7) verschiebbar gelagert ist.

6. Fahrzeugdach nach Anspruch 5, dadurch gekennzeichnet, daß der Ausstellhebel (10) über eine Kulissenanordnung (Kulissenstifte 14, 15 ; Kulissenschlitze 16, 17) mit einem entlang der Führungsschiene (7) verschiebbar gelagerten Verstellglied (12) gekoppelt ist, das gegenüber dem Ausstellhebel in Richtung der Führungsschiene begrenzt längsverstellbar ist, wobei die Kulissenanordnung derart ausgelegt ist, daß sie in Abhängigkeit von einer solchen Längsverstellung ein Schwenken des Ausstellhebels gegenüber dem Verstellglied erzwingt.

## Claims

1. Vehicle roof with a fixed roof surface (1), which has a through roof opening (2), which can, if desired, be closed or at least partly exposed by means of two cover panels (5,6), which directly follow one another in the vehicle longitudinal direction in the closed state and in which, starting from its closing position, the front cover panel (5) can both be tilted open with its rear edge over the fixed roof surface and also slid rearwards, characterized in that the roof opening (2) extends at least approximately over the full length of the fixed roof surface (1), the rear cover panel (6) is constructed so as to be removable and, after removing the rear cover panel (6), the front cover panel (5) in the tilted open state can be moved into a position where at least its rear part projects rearwards over the rear edge of the roof opening (2).

2. Vehicle roof according to claim 1, characterized in that the front cover panel (5) is provided with mounting supports (rails 18), which allow a detachable securing of the removed rear cover panel (6) in a position parallel to the front cover panel (5).

3. Vehicle roof according to claim 2, characterized in that the mounting supports are constructed as rails (18) fitted to the two lateral edges of the front cover panel (5) on the top surface thereof.

4. Vehicle roof according to one of the preceding claims, characterized in that on both sides the front cover panel (5) is mounted on a panel carrier (8), which is pivotable by means of a slider (9) in the vicinity of its front end and is displaceably mounted along a lateral guide rail (7) extending over the full length of the roof opening (2).

5. Vehicle roof according to claim 4, characterized in that the rear end of the tilting lever (10) is articulated to the panel carrier (8) and is pivotable by means of a slider (11) and displaceabl mounted along the guide rails (7).

6. Vehicle roof according to claim 5, characterized in that the tilting lever (10) is coupled by means of a link system (link pins 14,15 ; link slots 16,17) with an adjusting member (12) displaceably mounted along the guide rails (7) and which is longitudinally adjustable to a limited extent in the direction of the guide rail with respect to the tilting lever, the link system being designed in such a way that, as a function of such a longitudinal adjustment, it forces a pivoting of the tilting lever with respect to the adjusting member.

## Revendications

1. Toit de véhicule comportant une surface de toit fixe (1) présentant une ouverture de toit (2) continue qui peut être, à volonté, fermée ou dégagée, du moins en partie, au moyen de deux couvercles, lesquels couvercles sont immédiatement placés l'un derrière l'autre dans leur position de fermeture suivant la direction longitudinale du véhicule, tandis que le couvercle avant (5) peut, en partant de sa position de fermeture, être aussi bien relevé par son bord arrière par dessus la surface de toit fixe que déplacé vers l'arrière, caractérisé en ce que :

– l'ouverture de toit (2) s'étend au moins approximativement sur toute la longueur de la surface de toit (1) fixe.

– le couvercle arrière (6) est réalisé démontable,

– le couvercle avant (5) est, après le retrait du couvercle arrière (6), déplaçable, en l'état relevé, en une position dans laquelle il dépasse vers l'arrière, au moins par sa partie arrière, le bord arrière de l'ouverture de toit (2).

2. Toit de véhicule selon la revendication 1, caractérisé en ce que le couvercle avant (5) est pourvu de fixations (rails 18), qui permettent la fixation démontable du couvercle arrière (6) retiré dans une position parallèle au couvercle avant (5).

3. Toit de véhicule selon la revendication 2, caractérisé en ce que les fixations sont constituées par deux rails (18) apposés sur les deux bords latéraux de la face supérieure du couvercle avant (5).

4. Toit de véhicule selon l'une des revendications qui précédent, caractérisé en ce que le couvercle avant est monté des deux côtés sur un porte couvercle (8), qui peut pivoter dans la région de son extrémité avant au moyen d'un coulisseau (9) et est monté mobile le long d'une glissière latérale (7) qui s'étend sur toute la longueur de l'ouverture de toit (2).

5. Toit de véhicule selon la revendication 4, caractérisé en ce qu'est articulée, sur le portecouvercle (8), l'extrémité arrière d'un levier de relèvement (10), qui peut pivoter au moyen d'un coulisseau (11) et est monté mobile le long de la glissière (7).

6. Toit de véhicule selon la revendication 5, caractérisé en ce que le levier de relèvement (10) est couplé au moyen d'une disposition à coulisses (chevilles de coulisse 14, 15) ; fentes de coulisse 16, 17) avec un élément de déplacement (12) monté mobile le long de la glissière (7), qui peut subir un déplacement longitudinal limité en direction de la glissière, et en ce que la disposition à coulisses est conçue de manière telle qu'elle contraint le levier de relèvement à pivoter par rapport à l'élément de déplacement en corrélation avec un tel déplacement longitudinal.

# FIG. 1

# FIG. 2

# FIG. 3

# FIG. 4

# FIG. 5

## FIG. 6

## FIG. 7

VIII — · — · —   VIII

## FIG. 8